# EUROPÄISCHE PATENTSCHRIFT

(11) **EP 2 592 267 B1**
(45) Veröffentlichungstag und Bekanntmachung des Hinweises auf die Patenterteilung: **23.10.2013**
(21) Anmeldenummer: 12007338.2
(22) Anmeldetag: 26.10.2012
(51) Int. Cl.: F04B 11/00, F04B 13/00, F04B 17/04, F16F 9/00

(54) **Dosierpumpe mit Anschlagdämpfer**
Metering pump with impact damper
Pompe de dosage avec amortisseur de butée

(30) Priorität: 12.11.2011 DE 102011118417
(43) Veröffentlichungstag der Anmeldung: 15.05.2013
(73) Patentinhaber: THOMAS MAGNETE GmbH, 57562 Herdorf (DE)
(72) Erfinder: Ohligschläger, Olaf, Dr., D 57520 Grünebach (DE); Müller, Axel, Dr., D 57072 Siegen (DE); Feckler, Michael, D 57552 Herdorf (DE)

(56) Entgegenhaltungen:
- DE-A1-102008 046 060
- DE-A1-102008 054 686
- DE-B3-102006 044 248

## Beschreibung

Gegenstand der Erfindung ist eine Dosierpumpe nach dem Oberbegriff des ersten Patentanspruchs.

Dosierpumpen sind bekannt, zum Beispiel aus den Druckschriften DE 4328621A1 und DE 10127996A1.

Bekannt sind auch Dosierpumpen mit Anschlagdämpfer, Beispiele für einen Elastomerdämpfer zeigen DE 4328621 A1 und DE 10 2008 055611 A1.

Beispiele für Flüssigkeitsdämpfer in einer Dosierpumpe zeigen die Druckschriften DE 10 2008 046060 A1 und DE 10 2008 024 280 A1. Bei dem Dämpfer entsprechend der Druckschrift DE 10 2008 055 609 A1 wirkt ein Elastomerdämpfer mit einem abgesperrten Flüssigkeitsvolumen zusammen.

Bei einem Elastomerdämpfer ist die Härte des Anschlags bestimmend für das Geräusch der Pumpe und gegebenenfalls den Verschleiß des Dämpfers. Ist der Anschlag zu hart, ergibt sich ein hohes Geräusch am Anfang des Bremsvorgangs, ist er zu weich, ergibt sich unter Umständen ein Geräusch am Ende des Bremsvorgangs und außerdem ein unzulässiger Verschleiß des Dämpfermaterials.

Ein konventioneller Flüssigkeitsdämpfer entsprechend DE 10 2008 046060 A1 arbeitet verschleißfrei, ist aber stark temperaturabhängig und erfordert sehr kleine Toleranzen der beteiligten Bauteile. Die Wirkung bleibt über dem Hub annähernd konstant, was bei einem Anschlagdämpfer nicht ausreicht, es wird eine sich verstärkende hubabhängige Wirkung erwartet.

Die Patentklasse F16F9/.. zeigt eine große Anzahl von Federn und Stoßdämpfern mit einer Flüssigkeit als Dämpfungsmittel, im Besondern sind aus Schwingungsdämpfern für die Kupplung von Wellen (DE 2531817A1) und für die Lagerung von Rohren, Kabinen oder Maschinen (DE 2419607A1) Kombinationen von elastischen Dämpfern und Flüssigkeitsdämpfern bekannt, aber die Bauform solcher Dämpfer lässt sich auf Dosierpumpen nicht übertragen.

Aufgabe dieser Erfindung ist die Kombination eines Elastomerdämpfers mit einem Flüssigkeitsdämpfer als Anschlag eines Pumpenkolbens in einer Dosierpumpe mit einer hubabhängig sich verstärkender Wirkung der Dämpfung. Die Dosiergenauigkeit soll dabei nicht verschlechtert, sondern verbessert werden und die Kosten sollen nicht erhöht werden.

Die Lösung der Aufgabe wird in den charakteristischen Merkmalen des ersten Patentanspruchs angegeben, näher beschrieben in den folgenden Ansprüchen.

Vor dem Ende seines Arbeitshubs schlägt der in einem Zylinder bewegliche und dynamisch abgedichtete Kolben der Dosierpumpe gegen einen Elastomerkörper an, der sich bei dem weiteren Vordringen des Kolbens verformt.

Dieser Elastomerkörper ist so gestaltet, dass der Kolben auf einen Wulst auftrifft, der ein Flüssigkeitsvolumen von dem Abfluss in der Mitte des Elastomerkörpers abtrennt. Dieses Flüssigkeitsvolumen wird durch eine Kammer begrenzt, deren Wände durch die Stirnfläche des Kolbens, den Wulst des Elastomerkörpers, den Boden des Elastomerkörpers und entweder durch einen zweiten Wulst des Elastomerkörpers oder durch den Zylinder gebildet sind.

Die Flüssigkeit kann vor allem durch Kanäle in der Oberfläche des Elastomerkörpers zum Abfluss in der Mitte des Elastomerkörpers fließen, allerdings wird dieses Abfließen durch den geringen Querschnitt der Kanäle behindert. Zusätzlich kann eine geringe Menge der Flüssigkeit über den Spalt zwischen dem Kolben und dem Zylinder abfließen, aber diese Menge ist für die Funktion des Dämpfers nicht erheblich.

Die dämpfende Wirkung wird einerseits durch den Verformungswiderstand des Elastomerkörpers und andererseits durch den Druck der Flüssigkeit in der Kammer erzeugt, der Druck stellt sich durch den Strömungswiderstand in den Kanälen ein.

Mit dem weiteren Vordringen des Kolbens erhöht sich der überwiegend elastische Verformungswiderstand des Elastomerkörpers, weil größere Querschnittsbereiche des Elastomerkörpers in die Verformung einbezogen werden und weil im Elastomerkörper immer umfassendere und komplexere Materialverdrängungen stattfinden. Parallel dazu verkleinert sich infolge der Verformung des Elastomerkörpers der wirksame Querschnitt der Kanäle für das Abfließen der in der Kammer eingeschlossenen Flüssigkeit, dies erhöht die dämpfende Wirkung, die überwiegend geschwindigkeitsabhängig ist.

Zur Einstellung der kolbenhubabhängigen Veränderung des wirksamen Querschnitts der Kanäle und damit der Dämpfungswirkung sind das Verhältnis von Tiefe zur Breite der Kanäle in der Oberfläche, die Anzahl der Kanäle in der Oberfläche und die Anzahl der Kanäle im Inneren des Elastomerkörpers zu optimieren.

Zusätzlich wird die Höhe des Wulstes oder der Mehrzahl der Wülste optimiert. Damit wird sowohl die Elastizität als auch die Dämpfung auf die Masse und die Geschwindigkeit des Kolbens und aller damit verbundenen beweglichen Massen abgestimmt.

So wird erreicht, dass einerseits der Kolben einen möglichst langen Weg unter der Wirkung der Dämpfung zurücklegt aber andererseits auch bei den ungünstigsten Bedingungen der Betriebstemperatur und der Versorgungsspannung des Elektromagneten der äußere Rand der Stirnfläche des Kolbens am Ende seines Hubes nicht auf den Elastomerkörper aufschlägt. Dadurch wird der Verschleiß des Elastomerkörpers vermieden oder stark verlangsamt.

Die Dosiergenauigkeit einer Dosierpumpe wird vor allem durch die genaue Einhaltung des wirksamen Hubes bestimmt. Dazu ist es vorteilhaft, die Gestaltung des Elastomerkörpers so zu optimieren, dass die Masse des Elastomerkörpers minimal wird, denn Elastomerkörper können nicht in so engen Toleranzen hergestellt werden, wie zum Beispiel Teile aus Stahl, und abhängig von den verwendeten Flüssigkeiten und ihren Zusätzen und Verunreinigungen können Elastomere quellen. Durch die Minimierung der Masse werden diese Einflüsse gering gehalten.

Eine alternativ vorgenommene weitere Minimierung der Masse führt dazu, dass die Wulst oder die Wülste im Querschnitt schwächer werden. Damit ergibt sich eine stärkere Verformung der Wulst oder der Wülste beim Anschlagen des Kolbens. Diese Verformung und das damit verbundene Walken des Elastomerwerkstoffs führen zu einer Temperaturerhöhung im Werkstoff und damit zu einer schnelleren vollen Funktionsfähigkeit des Dämpfers bei sehr niedrigen Umgebungstemteraturen.

Der Dämpfer bewirkt durch die kombinierte Wirkung der viskosen Dämpfung der Flüssigkeit und der überwiegend elastischen Rückstellkraft des Elastomerkörpers einen optimalen hubabhängigen Verlauf der Bremskraft auf den Kolben, die ihn bei minimaler Geräuschentwicklung stoßfrei zum Stillstand bringt und dabei den Verschleiß des Elastomerkörpers vermeidet. Wegen der Kombination der Bremswirkungen ist der Dämpfer vergleichsweise unempfindlich gegen Änderungen der Umgebungsbedingungen. Durch die geringere Masse des Elastomerkörpers im Vergleich zu einer massiven Dämpfungsscheibe wird die Dosiergenauigkeit positiv beeinflusst.

Dosierpumpen mit den beschriebenen Dämpfern werden in Fahrzeugen zur Versorgung von Standheizungen oder von Abgasbehandlungssystemen verwendet.

### Bilder:

Fig 1 zeigt eine Dosierpumpe mit einem erfindungsgemäßen Dämpfer
Fig. 2 zeigt den Dämpfer im Detail.

### Beispielhafte Ausführung:

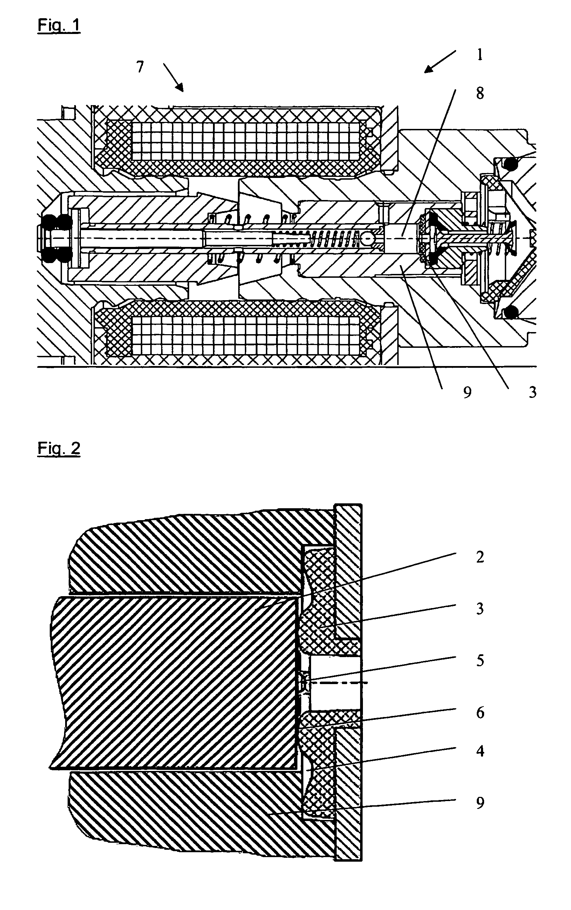

Die Dosierpumpe (1), wie in Fig. 1 dargestellt, besteht aus einem antreibenden Elektromagneten (7) und einem fluidischen Verdrängerapparat (8), der seinerseits aus einem Zylinder (9) und einem Kolben (2) besteht, wobei der Kolben am Ende seines Arbeitshubs, wie in Fig 2 dargestellt, an einem Elastomerkörper (3) anschlägt, der dann mittels eines abdichtenden Wulstes (6) oder mehrerer Wülste eine mit Flüssigkeit gefüllte Kammer (4) abteilt, aus der die Flüssigkeit überwiegend durch mehrere Kanäle (5) an der Oberfläche oder im Inneren des Elastomerkörpers abfließt, während sich bei einem weiteren Vordringen des Kolbens (2) das Volumen der Kammer (4) bei gleichzeitiger Verformung des Elastomerkörpers (3) verkleinert.

Der Querschnitt des Kanals (5) zur Ableitung der Flüssigkeit aus der Kammer (4) wird während der Abbremsphase des Kolbens (2) durch die fortschreitende Verformung des Elastomerkörpers (3) verkleinert.

Die Form des Wulstes (6) ist so gestaltet, dass während der Abbremsphase des Kolbens (2) die Berührfläche zwischen dem Kolben und dem Elastomerkörper (3) zunimmt. Dazu weist der Wulst vorzugsweise eine Querschnittsform auf, die einem abgerundeten Dreieck mit breiter Basis entspricht.

Die vom Kolbenhub abhängige Verkleinerung des wirksamen Querschnitts der Kanäle (5) wird durch das Verhältnis von Tiefe zur Breite der Kanäle in der Oberfläche, die Anzahl der Kanäle in der Oberfläche und die Anzahl der Kanäle im Inneren des Elastomerkörpers eingestellt.

Der Verschleiß des Elastomerkörpers (3) wird vermieden oder verlangsamt, weil neben der oben genannten Optimierung der Kanäle die Höhe des Wulstes (6) oder der Mehrzahl der Wülste so auf die Masse und die Geschwindigkeit des Kolbens (2) und aller damit verbundenen beweglichen Massen abgestimmt ist, dass der äußere Rand der Stirnfläche des Kolbens (2) am Ende seines Hubes gerade nicht auf den Elastomerkörper (3) aufschlägt.

Der Elastomerkörper (3) ist mit minimaler Masse ausgeführt, insbesondere durch eine tiefe und breite Kammer (4).

### Liste der Bezugszeichen

- 1.: Dosierpumpe
- 2.: Kolben
- 3.: Elastomerkörper
- 4.: Kammer
- 5.: Kanal
- 6.: Wulst
- 7.: Elektromagnet
- 8.: Verdrängerapparat
- 9.: Zylinder

## Patentansprüche

1. Dosierpumpe (1) bestehend aus einem antreibenden Elektromagneten (7) und einem fluidischen Verdrängerapparat (8), der seinerseits aus einem Zylinder (9) und einem Kolben (2) aufgebaut ist, wobei der Kolben (2) am Ende seines Arbeitshubs an einem Elastomerkörper (3) anschlägt, **dadurch gekennzeichnet, dass** der Elastomerkörper dann mittels eines gegen den Kolben abdichtenden Wulstes (6) oder mehrerer Wülste eine mit Flüssigkeit gefüllte Kammer (4) abteilt, aus der die Flüssigkeit durch eingeformte Kanäle (5) an der Oberfläche oder im Inneren des Elastomerkörpers abfließt, während sich bei dem weiteren Vordringen des Kolbens (2) bei gleichzeitiger Verformung des Elastomerkörpers (3) das Volumen der Kammer (4) verkleinert, wobei der wirksame Querschnitt der Kanäle (5) zur Ableitung der Flüssigkeit aus der Kammer (4) während der Abbremsphase des Kolbens (2) durch die fortschreitende Verformung des Elastomerkörpers (3) verkleinert wird.

2. Dosierpumpe entsprechend dem Anspruch 1 **dadurch gekennzeichnet, dass** die Form des Wulstes (6) so gestaltet ist, dass während der Abbremsphase des Kolbens (2) die Berührfläche zwischen dem Kolben und dem Elastomerkörper (3) zunimmt, wobei der Wulst vorzugsweise eine Querschnittsform aufweist, die einem abgerundeten Dreieck mit breiter Basis entspricht.

3. Dosierpumpe entsprechend den Ansprüchen 1 oder 2 **dadurch gekennzeichnet, dass** die vom Kolbenhub abhängige Verkleinerung des wirksamen Querschnitts der Kanäle (5) durch das Verhältnis von Tiefe zur Breite der Kanäle in der Oberfläche, die Anzahl der Kanäle in der Oberfläche und/oder die Anzahl der Kanäle im Inneren des Elastomerkörpers eingestellt ist.

4. Dosierpumpe entsprechend dem Anspruch 1 **dadurch gekennzeichnet, dass** der Verschleiß des Elastomerkörpers (3) vermieden oder erheblich verlangsamt wird, weil die viskose Dämpfungswirkung der verdrängten Flüssigkeit und die Höhe des Wulstes (6) oder der Mehrzahl der Wülste so auf die Masse und die Geschwindigkeit des Kolbens (2) und aller damit verbundenen beweglichen Massen abgestimmt ist, dass der unter der Wirkung der Dämpfung zurückgelegte Hub des Kolbens (2) möglichst groß ist, aber der äußere Rand der Stirnfläche des Kolbens (2) am Ende seines Hubes nicht auf den Elastomerkörper (3) aufschlägt.

5. Dosierpumpe entsprechend einem der Ansprüche 1 bis 4 **dadurch gekennzeichnet, dass** der Elastomerkörper (3) mit minimaler Masse ausgeführt ist, insbesondere durch eine tiefe und breite Kammer (4).

## Claims

1. Metering pump (1) consisting of a propelling electromagnet (7) and a fluidic displacer apparatus (8), which for its part is made up of a cylinder (9) and a piston (2), the piston (2) at the end of its working stroke abutting an elastomer body (3), **characterized in that**, by means of a bead (6) or multiple beads providing a seal with respect to the piston, the elastomer body then divides off a liquid-filled chamber (4), from which the liquid flows through incorporated channels (5) on the surface or in the interior of the elastomer body, while the volume of the chamber (4) is reduced as the piston (2) advances further, with simultaneous deformation of the elastomer body (3), the effective cross section of the channels (5) for carrying away the liquid from the chamber (4) being reduced during the slowing-down phase of the piston (2) by the progressing deformation of the elastomer body (3).

2. Metering pump according to Claim 1, **characterized in that** the form of the bead (6) is designed such that the contact surface between the piston and the elastomer body (3) increases during the slowing-down phase of the piston (2), the bead preferably having a cross-sectional form that corresponds to a rounded triangle with a broad base.

3. Metering pump according to Claim 1 or 2, **characterized in that** the reduction in the effective cross section of the channels (5) that is dependent on the piston stroke is set by the depth-to-width ratio of the channels on the surface, the number of channels on the surface and/or the number of channels in the interior of the elastomer body.

4. Metering pump according to Claim 1, **characterized in that** the wearing of the elastomer body (3) is avoided, or slowed down considerably, because the viscous damping effect of the displaced liquid and the height of the bead (6) or the plurality of beads is made to match the mass and the speed of the piston (2) and all of the associated movable masses, **in that** the stroke of the piston (2) performed under the effect of the damping is as great as possible, but, at the end of its stroke, the outer periphery of the end face of the piston (2) does not abut the elastomer body (3).

5. Metering pump according to one of Claims 1 to 4, **characterized in that** the elastomer body (3) is made to have a minimal mass, in particular by having a chamber (4) that is deep and wide.

## Revendications

1. Pompe de dosage (1) constituée d'un électroaimant d'entraînement (7) et d'un appareil de refoulement fluidique (8) qui est constitué pour sa part d'un cylindre (9) et d'un piston (2), le piston (2) butant à la fin de sa course de travail contre un corps en élastomère (3),
**caractérisée en ce que**
le corps en élastomère divise alors une chambre (4) remplie de liquide au moyen d'un bourrelet (6) ou de plusieurs bourrelets réalisant l'étanchéité vis-à-vis du piston, hors de laquelle chambre le liquide s'écoule à travers des canaux façonnés (5) sur la surface ou à l'intérieur du corps en élastomère, tandis que le volume de la chambre (4) diminue lors de l'avance poursuivie du piston (2) avec déformation simultanée du corps en élastomère (3), la section transversale efficace des canaux (5) pour évacuer le liquide hors de la chambre (4) pendant la phase de freinage du piston (2) étant réduite par la déformation poursuivie du corps en élastomère (3).

2. Pompe de dosage selon la revendication 1, **caractérisée en ce que** la forme du bourrelet (6) est telle que pendant la phase de freinage du piston (2), la surface de contact entre le piston et le corps en élastomère (3) augmente, le bourrelet présentant de préférence une forme en section transversale qui correspond à un triangle arrondi à large base.

3. Pompe de dosage selon les revendications 1 ou 2, **caractérisée en ce que** la diminution de la section transversale efficace des canaux (5), qui dépend de la course du piston, est ajustée par le rapport de la profondeur à la largeur des canaux dans la surface, par le nombre des canaux dans la surface et/ou par le nombre des canaux à l'intérieur du corps en élastomère.

4. Pompe de dosage selon la revendication 1, **caractérisée en ce que** l'usure du corps en élastomère (3) est évitée ou considérablement ralentie parce que l'effet d'amortissement visqueux du liquide refoulé et la hauteur du bourrelet (6) ou de la pluralité des bourrelets sont ajustés à la masse et à la vitesse du piston (2) et de toutes les masses mobiles associées à celui-ci, de telle sorte que la course du piston (2) parcourue sous l'effet de l'amortissement soit aussi grande que possible mais que le bord extérieur de la surface frontale du piston (2) ne vienne pas buter contre le corps en élastomère (3) à la fin de sa course.

5. Pompe de dosage selon l'une quelconque des revendications 1 à 4, **caractérisée en ce que** le corps en élastomère (3) est réalisé avec une masse minimale, en particulier par une chambre profonde et large (4).
